# FASCICULE DE BREVET EUROPEEN

(11) **EP 3 156 671 B1**
(45) Date de publication et mention de la délivrance du brevet: **27.12.2017**
(21) Numéro de dépôt: 16187820.2
(22) Date de dépôt: 08.09.2016
(51) Int. Cl.: F16B 39/10

(54) **DISPOSITIF ET PROCEDE DE FIXATION**
BEFESTIGUNGSVORRICHTUNG UND -VERFAHREN
ATTACHMENT DEVICE AND METHOD

(30) Priorité: 15.10.2015 FR 1502169
(43) Date de publication de la demande: 19.04.2017
(73) Titulaire: Airbus Helicopters, 13725 Marignane Cedex (FR)
(72) Inventeur: FIOCCHI, Guillaume, 13080 Luynes (FR)
(74) Mandataire: GPI & Associés

(56) Documents cités:
- WO-A1-2014/161561
- US-A- 2 887 891
- US-B1- 7 927 052

## Description

La présente invention concerne un dispositif et un procédé de fixation. En particulier, l'invention vise un dispositif de fixation muni d'un écrou de serrage pour retenir un roulement sur un arbre ou sur un moyeu.

Par exemple, un organe de roulement à billes ou à rouleaux peut être fixé à un organe mécanique présentant une extrémité filetée. Un tel organe mécanique peut être un arbre ou un moyeu par exemple. Un organe mécanique de ce type et dénommé « tige » par la suite.

Cet organe de roulement est maintenu par un écrou de serrage vissé à l'extrémité filetée. Un tel écrou de serrage est parfois dénommé « écrou de roulement ».

Suivant l'utilisation du système mécanique ainsi réalisé, l'écrou de serrage doit être sécurisé pour éviter le retrait accidentel de cet écrou de serrage. A titre illustratif, un système mécanique d'un aéronef subit usuellement des vibrations pouvant induire le desserrage d'un tel écrou et à terme la perte de l'écrou.

Pour freiner un écrou de serrage vissé à un organe mécanique, des dispositifs munis de « rondelles-freins » sont connus.

Selon une première réalisation connue, un dispositif de fixation est muni d'un écrou comportant un bord crénelé. Ce bord crénelé définit des encoches destinées à permettre l'insertion d'un outil de vissage de l'écrou.

De plus, ce bord comporte une gorge annulaire et des cannelures axiales fines.

En outre, le dispositif de fixation possède une rondelle-frein. La rondelle-frein comporte un anneau s'étendant radialement d'une périphérie dite « périphérie interne » vers une périphérie dite « périphérie externe » par commodité. De plus, l'anneau s'étend axialement le long de l'axe de symétrie de cet anneau d'une face annulaire avant vers une face annulaire arrière selon une épaisseur dite « épaisseur principale » par commodité.

La rondelle-frein est alors munie d'une part d'au moins un ergot s'étendant radialement à partir d'une périphérie de l'anneau et, d'autre part de cannelures axiales agencées sur l'autre périphérie de l'anneau.

Dès lors, l'écrou est vissé à une extrémité filetée d'un organe mécanique, tel qu'un arbre ou un moyeu.

Par suite, la rondelle-frein est introduite axialement entre l'écrou et l'extrémité filetée. En particulier, chaque ergot est positionné dans une rainure axiale de l'extrémité filetée. De plus, les cannelures de la rondelle-frein sont en prise avec les cannelures de l'écrou.

Pour bloquer la rondelle-frein axialement, le dispositif de fixation comprend un anneau de rétention agencé dans la gorge annulaire de l'écrou.

Cette première réalisation connue est intéressante mais nécessite d'usiner une gorge annulaire et des cannelures fines dans l'écrou ce qui peut s'avérer onéreux.

En outre, le dispositif de fixation implique la mise en place de deux éléments de freinage, à savoir la rondelle-frein et l'anneau de rétention. Cette mise en place peut parfois s'avérer longue.

Une deuxième réalisation connue comporte uniquement une rondelle-frein.

La rondelle-frein comporte un anneau s'étendant radialement d'une périphérie dite « périphérie interne » vers une périphérie dite « périphérie externe » par commodité. De plus, l'anneau s'étend axialement le long de l'axe de symétrie de cet anneau d'une face annulaire avant vers une face annulaire arrière selon une épaisseur dite « épaisseur principale » par commodité.

La rondelle-frein est alors munie d'une part d'au moins un ergot s'étendant radialement à partir d'une périphérie de l'anneau et, d'autre part, d'une pluralité de dents s'étendant chacune radialement à partir de l'autre périphérie de l'anneau.

Dès lors, la rondelle-frein est introduite axialement entre l'écrou et l'extrémité filetée. La rondelle-frein est positionnée avant la mise en place de l'écrou pour être coincée axialement entre l'écrou et l'extrémité filetée.

Lors du positionnement de la rondelle-frein, chaque ergot est positionné dans une rainure axiale de l'extrémité filetée.

En outre, au moins une dent en vis-vis d'une encoche de l'écrou est rabattue à 90 degrés par déformation plastique pour être introduite dans cette encoche.

Cette deuxième réalisation connue peut être longue à mettre en oeuvre. En effet, la déformation plastique des dents peut être relativement longue à réaliser.

Le document US 7,927,052 décrit un dispositif de freinage du type de la deuxième réalisation.

Selon ce document US 7,927,052, une rondelle-frein comporte des dents de grandes longueurs et des dents de petites longueurs qui s'étendent sensiblement axialement.

Les dents en vis-à-vis d'encoches sont alors dépliées pour être agencées dans ces encoches en s'étendant radialement.

De même, la rondelle-frein comporte un ergot prenant la forme d'une languette, la languette s'étendant aussi axialement.

Le document FR 2,964,166 décrit un dispositif de fixation muni dune tige filetée et d'un écrou.

L'écrou comporte une jupe vissée sur la tige filetée. La jupe est déformée lors de l'opération de vissage en étant vissée en force afin que la déformation de la jupe forme un frein s'opposant au dévissage de l'écrou.

Après vissage, une bague intermédiaire est montée entre la jupe et une extrémité hexagonale de la tige filetée. Cette bague intermédiaire comporte un anneau s'étendant radialement d'une périphérie dite « périphérie interne » vers une périphérie dite « périphérie externe » par commodité. La périphérie interne comporte alors des crans engagés sur les arêtes saillantes de l'extrémité hexagonale. En outre, la périphérie externe comporte deux pattes insérées dans des encoches de la jupe de l'écrou.

Enfin, la bague intermédiaire est maintenue axialement à l'intérieur de la jupe par un anneau de rétention élastique fendu monté dans une gorge de la jupe.

Les documents WO 2014/161561 et US 2887891 sont aussi connus.

La présente invention a alors pour objet de proposer un dispositif de fixation alternatif tendant à faciliter le freinage d'un écrou.

Selon l'invention, un dispositif de fixation comprend un organe mécanique dénommé « tige » muni d'un tronçon fileté s'étendant axialement le long d'un axe central de symétrie de la tige, ce tronçon fileté ayant au moins une entaille s'étendant axialement, dénommée « rainure » par commodité.

De plus, le dispositif de fixation comprend un organe mécanique dénommé « écrou » pourvu d'une portion filetée à visser au tronçon fileté, l'écrou comprenant une pluralité de déports s'étendant axialement à partir de la portion filetée, deux déports adjacents étant séparés circonférentiellement par une entaille dénommée « encoche » par commodité.

En outre, le dispositif de fixation a une rondelle-frein destinée être agencée dans un espace interne localisé entre les déports et le tronçon fileté, la rondelle-frein étant munie d'une base s'étendant radialement d'une périphérie dite « périphérie interne » vers une périphérie dite « périphérie externe », la rondelle-frein étant pourvue d'au moins un ergot s'étendant à partir d'une desdites périphéries de la base, ladite rondelle-frein étant pourvue d'une pluralité de dents qui s'étendent chacune radialement à partir de la périphérie de la base qui n'est pas solidaire d'un ergot avant que la rondelle-frein soit introduite dans l'espace interne.

Un des organes mécaniques comporte une gorge annulaire au moins partiellement fermée axialement et ouverte radialement sur l'espace interne. La tige ou l'écrou comporte donc une gorge annulaire.

Chaque dent étant flexible, lorsque la rondelle-frein est en position de freinage dans l'espace interne, chaque ergot est agencé dans une entaille de l'organe mécanique dépourvu de la gorge, les dents comprenant au moins une dent dite « dents non déformée » agencée dans au moins une entaille de l'organe mécanique pourvu de la gorge, lesdites dents comprenant au moins une dent dite « dent déformée » qui est fléchie suite à une insertion axiale de la rondelle-frein dans l'espace interne par interférence avec l'organe mécanique pourvu de la gorge, chaque dent déformée présentant une extrémité libre agencée dans ladite gorge, chaque dent déformée présentant une angulation comprise entre 0 degré et 90 degrés avec un plan contenant la base, ce plan étant décalé axialement par rapport à ladite gorge annulaire et perpendiculaire à l'axe central.

L'expression « au moins partiellement fermée axialement » signifie que la gorge peut par exemple être délimitée axialement par une pièce en forme de L de manière à présenter une seule butée axiale, ou par une pièce en forme de U ou équivalent de manière à présenter deux butées axiales.

Le terme « flexible » signifie que chaque dent déformée peut être tordue lors de l'insertion de la rondelle-frein. La raideur adéquate des dents peut être déterminée par essais afin de trouver un compromis acceptable. Les dents déformées sont par exemple suffisamment flexibles pour permettre l'insertion et l'extraction de la rondelle-frein, et suffisamment rigides pour permettre de bloquer l'écrou.

L'expression « position de freinage » fait référence à la position de la rondelle-frein lorsque la rondelle-frein est agencée dans l'espace interne, les dents non déformées étant dans les entailles requises et les dents déformées débouchant dans la gorge annulaire. Les dents déformées sont en outre éventuellement en butée axiale contre une paroi délimitant axialement la gorge. Dans cette position, chaque ergot est agencé dans une entaille de l'organe mécanique dépourvu de la gorge.

La rondelle-frein peut être obtenue à l'aide d'une tôle détourée de manière à constituer des dents flexibles.

Selon un premier mode de réalisation, l'écrou est muni de la gorge annulaire. Dès lors, chaque ergot est positionné dans une rainure de la tige, les dents coopérant avec les encoches et la gorge de l'écrou. En particulier, chaque dent non déformée pénètre dans une encoche pour être coincée circonférentiellement, chaque dent déformée étant fléchie lors de l'insertion de la rondelle-frein pour être coincée axialement voire circonférentiellement dans la gorge annulaire de l'écrou.

Selon un deuxième mode de réalisation, la tige est munie de la gorge annulaire. Dès lors, chaque ergot est positionné dans une encoche de l'écrou, les dents coopérant avec chaque rainure et la gorge de la tige. En particulier, chaque dent non déformée pénètre dans une rainure pour être coincée circonférentiellement, chaque dent déformée étant fléchie pour être coincée axialement voire circonférentiellement dans la gorge annulaire de la tige.

Quelle que soit la réalisation, ce dispositif est donc muni d'un unique frein élastique se montant en une unique opération.

En effet, la rondelle-frein représente ce frein élastique et peut se monter par le biais uniquement d'une insertion axiale dans l'espace interne. La rondelle-frein est poussée dans l'espace interne ce qui induit la déformation élastique des dents déformées pour permettre leur positionnement dans la gorge annulaire.

La rondelle-frein offre une fois positionnée au moins deux modes de freinages de l'écrou.

La rondelle-frein permet de freiner la rotation de l'écrou par interférence de forme circonférentiellement entre d'une part chaque ergot et chaque entaille associée et, d'autre part entre chaque dent non déformée et l'entaille associée.

La rondelle-frein permet aussi de freiner la rotation de l'écrou d'une part par interférence de forme circonférentiellement entre chaque ergot et chaque entaille associée et, d'autre part par friction entre chaque dent déformée et la gorge annulaire.

Enfin, la rondelle-frein permet éventuellement de freiner la translation axiale de l'écrou par rapport à la tige par interférence géométrique de la rondelle-frein dans la gorge.

Ce dispositif de fixation représente donc un dispositif simple permettant de freiner un écrou de serrage.

L'utilisation d'une unique rondelle-frein peut tendre à réduire la durée de montage du dispositif de fixation et à réduire son coût.

En effet, l'invention ne requiert éventuellement pas d'autre opération que la simple insertion de la rondelle-frein pour réaliser un freinage multiple de l'écrou sur la tige, alors que certains arts antérieurs enseignent de réaliser une opération supplémentaire de pliage manuel d'un ergot ou d'une dent après mise en place d'une rondelle-frein ou encore l'agencement d'un anneau de rétention.

De plus, l'écrou peut être simplifié par rapport aux écrous devant coopérer avec une rondelle-frein et un anneau de rétention.

La rondelle-frein peut aussi être découpée dans une tôle d'épaisseur constante ou variable.

Par ailleurs, le dispositif de fixation peut mettre en oeuvre un écrou standard du commerce, connu par ailleurs comme écrou de roulement, muni d'un sillon annulaire destiné à accueillir un anneau d'agrafage élastique. Ce sillon est susceptible de représenter une gorge au sens de l'invention.

Ce dispositif de fixation peut comporter une ou plusieurs des caractéristiques qui suivent.

Ainsi, chaque ergot peut s'étendre radialement avant l'insertion de la rondelle-frein dans l'espace interne.

En outre, chaque ergot peut être pliable plastiquement pour être plié avant l'insertion de la rondelle-frein dans l'espace interne.

La rondelle-frein peut alors être aisément usinée à partir d'une tôle.

Par exemple, un ergot est plié pour maximiser l'interférence avec l'entaille correspondante. Un ergot de faible épaisseur peut ainsi être utilisé, sans risquer d'être inséré dans un filet d'un filetage.

Selon une première alternative, la rondelle-frein présente une épaisseur constante.

Le terme « épaisseur » fait référence à une dimension de la rondelle-frein selon l'axe de symétrie axiale de la base, avant la déformation des dents voire de l'ergot.

Dès lors, chaque ergot présente axialement une première épaisseur, chaque dent présente axialement une deuxième épaisseur et la base présente axialement une troisième épaisseur, la première épaisseur ainsi que la deuxième épaisseur et la troisième épaisseur étant égales.

Dans cette première alternative, la rondelle-frein est constituée d'une tôle d'épaisseur constante suffisamment faible pour pouvoir fléchir au montage de manière adéquate et suffisamment épaisse pour exercer efficacement la fonction de freinage.

Selon une seconde alternative, la rondelle-frein présente une épaisseur variable.

Eventuellement, chaque ergot présente axialement une première épaisseur, chaque dent présente axialement une deuxième épaisseur, la deuxième épaisseur étant inférieure à la première épaisseur.

Le terme « épaisseur » désigne une dimension d'une pièce mécanique. Ainsi, la rondelle-frein peut s'étendre entre une face avant vers une face arrière, le terme épaisseur désignant une dimension de l'élément concerné de la face avant vers la face arrière.

La seconde alternative consiste à utiliser une tôle d'épaisseur variable et non uniforme. Par exemple, la tôle est plus épaisse au niveau des ergots pour éviter une déformation des ergots. Par contre, la tôle est plus fine au niveau des dents pour rendre flexibles ces dents.

Par ailleurs, les dents peuvent être identiques et / ou circonférentiellement équiréparties sur la base.

Une telle rondelle-frein tend à être plus facile à usiner et à mettre en place.

Selon un autre aspect, au moins deux dents peuvent être agencées dans une même entaille lorsque la rondelle-frein est agencée dans l'espace interne.

Par ailleurs, la base est éventuellement agencée axialement entre la gorge et la portion filetée lorsque la rondelle-frein est agencée dans l'espace interne.

Cet agencement permet de déformer automatiquement les dents selon l'inclinaison requise lors de l'insertion de la rondelle-frein, pour bloquer axialement la rondelle-frein voire l'écrou.

Selon une première variante du premier mode de réalisation, le tronçon fileté est entouré par la portion filetée, chaque ergot étant solidaire de la périphérie interne de la base, chaque dent étant solidaire de la périphérie externe de la base, la gorge étant ménagée dans les déports.

La première variante du premier mode de réalisation permet un freinage positif d'un écrou à filetage interne muni d'une gorge annulaire de rétention.

Chaque déport est séparé de l'axe central par une première distance radiale minimale, et la portion filetée est séparée dudit axe central par une deuxième distance radiale minimale, la deuxième distance radiale étant inférieure à la première distance radiale.

Chaque distance radiale minimale représente la plus petite distance séparant radialement l'organe concerné de l'axe central, à savoir selon une direction perpendiculaire à l'axe central.

En outre, les déports définissant un espace circulaire creux délimitant axialement l'espace interne, cet espace interne présentant un premier rayon au niveau d'un plan vertical traversant la base, les extrémités libres des dents étant inscrites dans un cercle présentant un deuxième rayon avant l'insertion de la rondelle-frein dans l'espace interne, le deuxième rayon est supérieur au premier rayon.

Selon une deuxième variante du premier mode de réalisation, le tronçon fileté entoure la portion filetée, chaque ergot étant solidaire de la périphérie externe de la base, chaque dent étant solidaire de la périphérie interne de la base, la gorge étant ménagée dans les déports.

La seconde variante du premier mode de réalisation permet un freinage positif d'un écrou à filetage externe muni d'une gorge annulaire de rétention.

Chaque déport est alors séparé de l'axe central par une première distance radiale minimale et la portion filetée est séparée dudit axe central par une deuxième distance radiale minimale, la deuxième distance radiale étant supérieure à la première distance radiale.

Les déports définissant un espace circulaire creux délimitant axialement l'espace interne, cet espace interne présentant un premier rayon au niveau d'un plan vertical traversant la base, les extrémités libres des dents délimitant un cercle présentant un deuxième rayon avant l'insertion de la rondelle-frein dans l'espace interne, le deuxième rayon est inférieur au premier rayon.

Selon une première variante du deuxième mode de réalisation, le tronçon fileté est entouré par la portion filetée, chaque ergot étant solidaire de la périphérie externe de la base, chaque dent étant solidaire de la périphérie interne de la base, la gorge étant ménagée dans la tige.

La première variante du deuxième mode de réalisation permet un freinage positif d'un écrou à filetage interne sur une tige munie d'une gorge annulaire de rétention.

Selon une deuxième variante du deuxième mode de réalisation, le tronçon fileté entoure la portion filetée, chaque ergot étant solidaire de la périphérie interne de la base, chaque dent étant solidaire de la périphérie externe de la base, la gorge étant ménagée dans la tige.

La deuxième variante du deuxième mode de réalisation permet un freinage positif d'un écrou à filetage externe sur une tige munie d'une gorge annulaire de rétention.

L'invention vise aussi un procédé de fixation mettant en oeuvre le dispositif de fixation selon l'invention. Ce procédé comporte les étapes suivantes :
- vissage de la portion filetée de l'écrou sur le tronçon fileté de la tige,
- insertion de la rondelle-frein dans l'espace interne en disposant chaque ergot dans une entaille de l'organe mécanique dépourvu de la gorge du tronçon filetée, chaque dent déformée étant fléchie lors du contact des dents avec l'organe mécanique pourvu de ladite gorge, ladite rondelle-frein étant enfoncée dans l'espace interne jusqu'à ce qu'une extrémité libre de chaque dent déformée pénètre dans ladite gorge, chaque dent non déformée étant agencée dans au moins une entaille de l'organe mécanique pourvu de ladite gorge.

L'insertion de la rondelle-frein peut être réalisée en poussant ladite base avec une bague.

L'invention et ses avantages apparaîtront avec plus de détails dans le cadre de la description qui suit avec des exemples donnés à titre illustratif en référence aux figures annexées qui représentent :
- la figure 1, une vue explicitant un dispositif de fixation selon une première variante d'un premier mode de réalisation permettant un freinage positif d'un écrou à filetage interne muni d'une gorge annulaire de rétention,
- la figure 2, une vue d'une rondelle-frein du dispositif de fixation de la figure 1,
- la figure 3, une coupe du dispositif de fixation de la figure 1,
- la figure 4, une vue explicitant un dispositif de fixation selon une deuxième variante d'un premier mode de réalisation permettant un freinage positif d'un écrou à filetage externe muni d'une gorge annulaire de rétention,
- la figure 5, une vue d'une rondelle-frein du dispositif de fixation de la figure 4,
- la figure 6, une coupe brisée du dispositif de fixation de la figure 4,
- les figures 7 et 8, des vues explicitant un dispositif de fixation selon une première variante d'un deuxième mode de réalisation permettant un freinage positif d'un écrou à filetage interne à une tige munie d'une gorge annulaire de rétention, et
- les figures 9 et 10, des vues explicitant un dispositif de fixation selon une deuxième variante d'un deuxième mode de réalisation permettant un freinage positif d'un écrou à filetage externe à une tige munie d'une gorge annulaire de rétention.

Les éléments présents dans plusieurs figures distinctes sont affectés d'une seule et même référence.

On note que trois directions X, Y et Z orthogonales les unes par rapport aux autres sont représentées sur certaines figures.

La première direction X est dite « longitudinale ». Les termes « axial » et « axialement » sont relatifs aux directions parallèles à la direction longitudinale. Les termes « radial » et « radialement » sont relatifs à des directions orthogonales à la direction longitudinale.

Une deuxième direction Y est dite « transversale » et une troisième direction Z est dite « en élévation ».

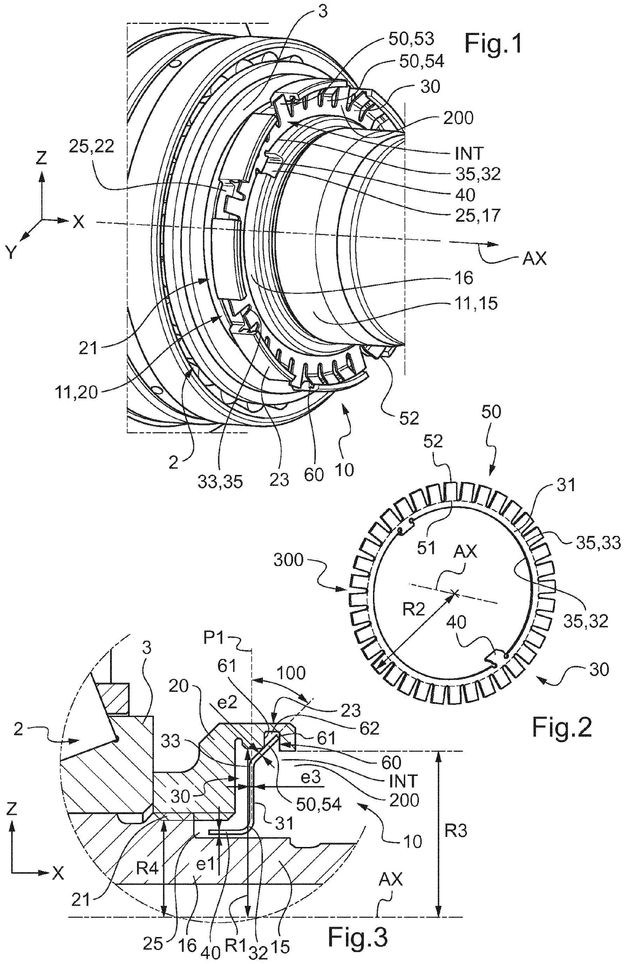

La figure 1 présente un dispositif de fixation 10 selon une première variante d'un premier mode de réalisation.

Indépendamment de la réalisation, ce dispositif de fixation 10 comporte deux organes mécaniques 11 à relier l'un à l'autre.

Dès lors, un organe mécanique 11 prend la forme d'une tige 15. Cette tige 15 peut permettre de positionner un organe de roulement 2 pourvu d'une bague de roulement 3, par exemple un organe de roulement à billes ou à rouleaux.

La tige 15 est alors munie d'un tronçon fileté 16, à savoir un tronçon muni d'une paroi portant un filetage. Ce tronçon fileté 16 s'étendant axialement le long d'un axe central AX de symétrie du tronçon fileté 16.

En outre, la tige 15 comporte au moins une entaille 25 dénommée « rainure 17 ». Chaque rainure 17 s'étend alors axialement le long d'une direction parallèle à l'axe central. Chaque rainure 17 s'étend alors axialement d'une section de passage ouverte ou fermée par un bord présent du côté d'une extrémité libre de la tige, vers une section de passage ouverte.

Chaque rainure 17 représente par exemple un creux ménagé dans la tige 15.

De plus, chaque rainure 17 est délimitée circonférentiellement par deux parois et au moins partiellement radialement par un fond. Chaque rainure est par exemple radialement borgne en étant uniquement ouverte radialement à l'opposé du fond.

Par ailleurs, le dispositif de fixation 10 est muni d'un autre organe mécanique 11 prenant la forme d'un écrou 20. L'écrou 20 est à visser à la tige 15.

L'écrou 20 comporte donc une portion filetée 21 destinée à être vissée au tronçon fileté 16. La portion filetée 21 peut prendre la forme d'un cylindre portant un filetage destiné à être en prise avec le filetage du tronçon fileté 16.

De plus, l'écrou 20 comporte une couronne prolongeant axialement la portion filetée 21. Cette couronne est munie d'une pluralité de déports 23 répartis circonférentiellement.

Dès lors, deux déports adjacents sont circonférentiellement séparés par une entaille 25 dénommée « encoche 22 ». Les déports sont éventuellement identiques deux à deux, et équirépartis circonférentiellement. Par exemple, les déports ont la forme d'arcs d'un cylindre à base circulaire.

L'expression « équirépartis circonférentiellement » signifie que l'angle séparant deux déports adjacents est constant, quel que soit le déport considéré.

Par ailleurs, la couronne de déports peut présenter un rayon différent du rayon de la portion filetée. Par suite, les déports sont décalés radialement par rapport au tronçon fileté vissé à la portion filetée. Dans ces conditions, un espace interne INT creux est présent radialement entre les déports 23 et le tronçon fileté 16. Cet espace interne INT est fermé axialement d'un premier côté par la portion filetée 21. Par contre, l'espace interne INT est ouvert axialement d'un deuxième côté opposé au premier côté au niveau d'un espace circulaire 200 de passage. Cet espace circulaire 200 est délimité radialement par un cercle décrit par une extrémité libre des déports.

En outre, le dispositif de fixation 10 possède une rondelle-frein 30 devant être insérée dans l'espace interne.

En référence à la figure 2, la rondelle-frein 30 comprend une base 31. Cette base 31 s'étend radialement d'une périphérie 35 dite « périphérie interne 32 » en regard de l'axe central AX vers une périphérie 35 dite « périphérie externe 33 ». De fait, la périphérie externe 33 entoure la périphérie interne 32.

De plus, la base s'étend circonférentiellement de manière continue entre sa périphérie interne 32 et sa périphérie externe 33.

La base 31 est une base annulaire, à savoir une base prenant strictement la forme d'un anneau ou sensiblement la forme d'un anneau. Dès lors, chaque périphérie peut prendre la forme d'un cercle ou peut être sensiblement circulaire.

De plus, la rondelle-frein 30 est pourvue d'au moins un ergot 40. L'ergot s'étend à partir d'une des périphéries 35 de la base 31. La périphérie 35 de la base 31 reliée à un ergot peut comporter des échancrures circulaires de part et d'autre de la base 31, ces échancrures pouvant résulter de l'usinage de la rondelle-frein. Dans ces conditions, la périphérie concernée est de fait sensiblement circulaire et non pas strictement circulaire.

Chaque ergot 40 peut s'étendre radialement avant l'insertion de la rondelle-frein 30 dans l'espace interne INT. Eventuellement, chaque ergot 40 est pliable plastiquement lors de son usinage pour être plié avant l'insertion de la rondelle-frein 30 dans l'espace interne INT.

En outre, la rondelle-frein 30 est pourvue d'une pluralité de dents 50 pliables élastiquement. Les dents présentent donc une raideur leur permettant de fléchir de manière réversible.

Au repos, à savoir avant que la rondelle-frein 30 ne soit introduite dans l'espace interne INT, les dents s'étendent chacune radialement à partir de la périphérie 35 de la base 31 qui n'est pas prolongée par un ergot 40. Chaque dent 50 s'étend plus précisément radialement d'une première extrémité 51 solidaire de la base vers une deuxième extrémité 52 libre.

Par suite, la rondelle-frein comporte :
- soit une base ayant une périphérie interne portant au moins un ergot, et une périphérie externe portant une pluralité de dents,
- soit une base ayant une périphérie externe portant au moins un ergot, et une périphérie interne portant une pluralité de dents.

Par ailleurs, les dents 50 sont par exemple identiques, voire circonférentiellement équiréparties autour de la base 31.

En référence à la figure 3, le dispositif de fixation est aussi muni d'une gorge 60 ménagée sur un des organes mécaniques 11. Par suite, la gorge 60 est ménagée soit sur l'écrou soit sur la tige selon le mode de réalisation.

Quel que soit le mode de réalisation, la gorge 60 est fermée au moins partiellement axialement et ouverte radialement sur l'espace interne INT. La gorge 60 peut alors présenter en coupe une forme de U, de V ou de C. La gorge est par exemple borgne en étant délimitée axialement par deux parois et radialement par un fond. Le fond peut être circonférentiellement continu ou discontinu.

Par conséquent, selon le procédé de l'invention, un opérateur visse la portion filetée 21 de l'écrou 20 sur le tronçon fileté 16 de la tige 15 pour positionner l'écrou 20. L'écrou 20 peut par exemple être placé en appui contre une bague de roulement 3.

L'opérateur insère alors la rondelle-frein dans l'espace interne INT.

A cet effet, l'opérateur positionne chaque ergot dans une entaille 25 de l'organe mécanique ne présentant pas la gorge 60. Chaque ergot a alors la faculté de coulisser le long de l'entaille concernée.

Par suite, l'opérateur fait alors coulisser la rondelle-frein dans l'espace interne INT. Pour réaliser cette opération, l'opérateur peut utiliser une bague creuse disposée autour de la tige pour exercer un effort axial sur la rondelle-frein, et en particulier sur la base 31.

Les dents de la rondelle-frein se comportent alors différemment en fonction de leur position.

Chaque dent 50 présente en vis-à-vis d'une entaille 25 de l'organe muni de la gorge est dite « dent non déformée 53 ». Les dents non déformées 53 coulissent alors dans ces entailles 25 en conservant leur forme initiale. Eventuellement, deux dents non déformées 53 ou plus peuvent être agencées dans une même entaille.

Toutes les autres dents 50 sont au contraire dites « dents déformées 54 ». Chaque dent déformée n'est de fait pas en vis-à-vis d'une entaille. Chaque dent déformée 54 entre donc en contact avec l'organe mécanique muni de la gorge 60. Par suite, chaque dent déformée fléchie avant d'atteindre la gorge 60, puis se déploie dans la gorge. Chaque dent déformée présente alors une extrémité libre agencée dans la gorge, et éventuellement en butée axiale contre une paroi délimitant axialement la gorge.

Lorsque la rondelle-frein 30 est dans sa position de freinage finale dans l'espace interne INT, la base 31 est positionnée dans l'espace interne INT entre la portion filetée 21 de l'écrou 20 et le tronçon fileté 16 de la tige 15. Cette base est en outre contenue dans un plan P1 vertical qui est décalé axialement par rapport à la gorge 60 annulaire et qui est perpendiculaire à l'axe central AX. Ce plan P1 vertical est par exemple agencé entre la portion filetée 21 et la gorge 60.

De plus, chaque dent déformée 54 présente une extrémité libre 52 agencée dans la gorge 60. Par conséquent, chaque dent déformée 54 présente une angulation 100 comprise entre 0 degré et 90 degrés avec le plan P1 vertical.

Selon un premier mode de réalisation illustré par les figures 1 à 6, la gorge 60 est une gorge discontinue ménagée dans l'écrou.

En référence aux figures 1 et 3, la gorge 60 est ménagée dans les déports 23 de l'écrou 20. Chaque déport présente alors un arc de la gorge 60.

Selon ce premier mode de réalisation, chaque ergot est alors disposé dans une entaille prenant la forme d'une rainure 17 de la tige. Dès lors, chaque dent non déformée 53 est disposée dans une entaille 25 prenant la forme d'une encoche 22 de l'écrou.

En particulier, les figures 1 à 3 illustrent une première variante du premier mode de réalisation.

Selon cette première variante du premier mode de réalisation, le tronçon fileté 16 est entouré par la portion filetée 21.

Par conséquent et en référence à la figure 2, chaque ergot 40 de la rondelle-frein est solidaire de la périphérie interne 32 de la base 31. Chaque dent 50 est au contraire solidaire de la périphérie externe 33 de la base 31.

Les extrémités libres 52 des dents sont alors inscrites dans un cercle 300 présentant un rayon dit « deuxième rayon R2 ». Ce cercle 300 représente donc un cercle dans lequel sont inscrites toutes les extrémités libres 52, et en particulier les extrémités libres des plus grandes dents en cas de présence de disparités entre les dents.

En référence à la figure 3, l'espace interne INT est délimité radialement au niveau du plan P1 vertical par un rayon dit « premier rayon R1 », le deuxième rayon R2 étant supérieur au premier rayon R1.

En outre, chaque déport 23 est séparé de l'axe central par une première distance radiale R3 minimale. La portion filetée 21 est alors séparée de l'axe central par une deuxième distance radiale R4 minimale, cette deuxième distance radiale R4 étant inférieure à la première distance radiale R3.

Quelle que soit la réalisation, la figure 3 illustre de plus l'angulation 100 séparant chaque dent déformée et le plan P1 vertical de la base.

De même, la figure 3 détaille la gorge 60. Cette gorge 60 est délimitée axialement par deux parois 61 s'étendant radialement. De plus, la gorge 60 est délimitée radialement par un fond 62 circulaire tout en étant ouverte vers l'espace interne INT. La gorge 60 s'étendant donc radialement d'un fond vers une ouverture. Ce fond 62 est circonférentiellement continu ou discontinu.

De plus, la rondelle-frein est, avant pliage, munie d'ergots 40 présentant axialement une première épaisseur e1, de dents 50 présentant axialement une deuxième épaisseur e2 et d'une base présentant axialement une troisième épaisseur e3.

Selon la version illustrée sur la figure 3, la première épaisseur e1 ainsi que la deuxième épaisseur e2 et la troisième épaisseur e3 sont égales.

Néanmoins, l'épaisseur de la rondelle-frein peut être variable

Selon une version non représentée, la deuxième épaisseur e2 est par exemple inférieure à la première épaisseur e1.

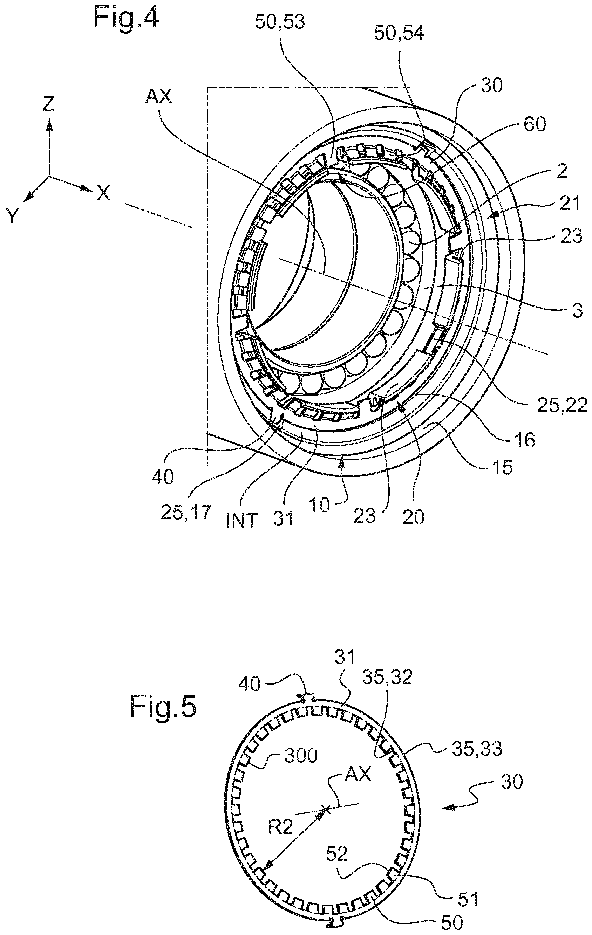

Les figures 4 à 6 illustrent une deuxième variante du premier mode de réalisation.

Selon cette deuxième variante du premier mode de réalisation, le tronçon fileté 16 entoure la portion filetée 21.

Par conséquent et en référence à la figure 5, chaque ergot 40 de la rondelle-frein est solidaire de la périphérie externe 33 de la base 31. Chaque dent 50 est au contraire solidaire de la périphérie interne 32 de la base 31.

Les extrémités libres 52 des dents décrivent alors un cercle 300 présentant un rayon dit « deuxième rayon R2 ». Ce cercle 300 représente donc un cercle inscrit dans toutes les extrémités libres 52, et en particulier les extrémités libres des plus grandes dents en cas de présence de disparités entre les dents.

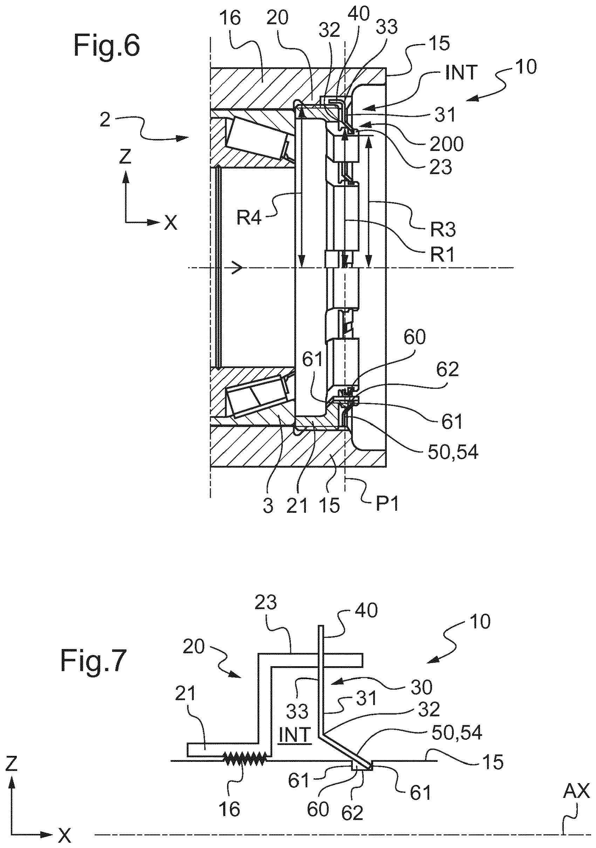

En référence à la figure 6, l'espace interne INT est délimité radialement au niveau du plan P1 vertical par un rayon dit « premier rayon R1 », le deuxième rayon R2 étant inférieur au premier rayon R1.

En outre, chaque déport 23 est séparé de l'axe central par une première distance radiale R3 minimale. La portion filetée 21 est alors séparée de l'axe central par une deuxième distance radiale R4 minimale, cette deuxième distance radiale R4 étant supérieure à la première distance radiale R3.

Les figures 7 à 10 illustrent un deuxième mode de réalisation.

Selon ce deuxième mode de réalisation, la gorge 60 est ménagée dans la tige 15. Chaque ergot est alors disposé dans une entaille prenant la forme d'une encoche de l'écrou. Dès lors, chaque dent non déformé 53 est disposée dans une entaille 25 prenant la forme d'une rainure de la tige.

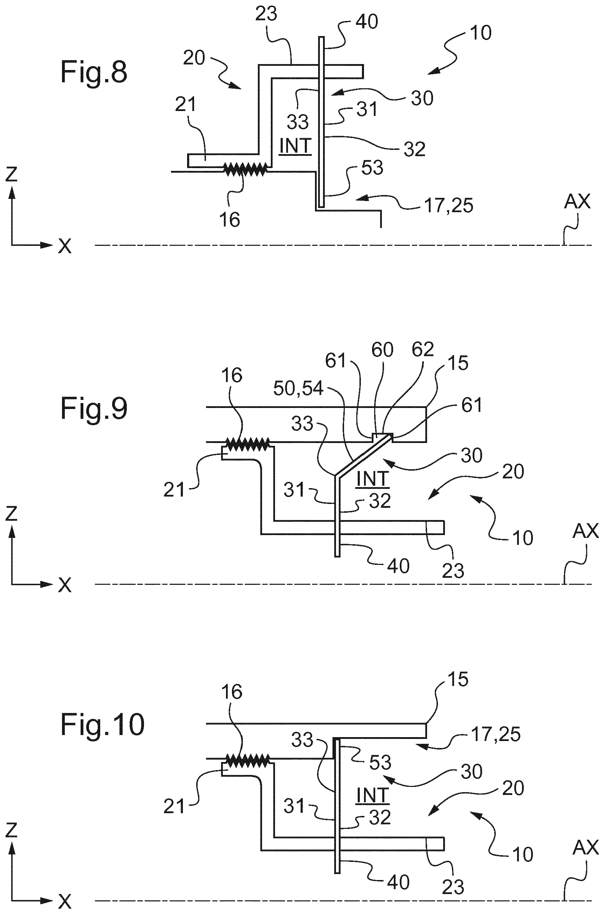

En particulier, les figures 7 et 8 illustrent une première variante du deuxième mode de réalisation.

Selon la première variante du deuxième mode de réalisation et en référence à la figure 7, le tronçon fileté 16 est entouré par la portion filetée 21.

Chaque ergot 40 est alors solidaire de la périphérie externe 33 de la base 31 de la rondelle-frein. Chaque dent 50 est au contraire solidaire de la périphérie interne 32 de la base 31.

En référence à la figure 8, chaque dent non déformé 53 est disposée dans une entaille 25 prenant la forme d'une rainure 17 de la tige 15.

Pour minimiser les dimensions de chaque rainure 17, les dents peuvent avoir des longueurs variables, chaque dent non déformée étant par exemple plus courte que les dents déformées.

Selon la deuxième variante du deuxième mode de réalisation illustré sur la figure 9, le tronçon fileté 16 entoure la portion filetée 21.

Chaque ergot 40 est alors solidaire de la périphérie interne 32 de la base 31. Chaque dent 50 est au contraire solidaire de la périphérie externe 33 de la base 31.

En référence à la figure 10, chaque dent non déformé 53 est disposée dans une entaille 25 prenant la forme d'une rainure 17 de la tige 15. Pour minimiser les dimensions de chaque rainure 17, les dents peuvent avoir des longueurs variables, chaque dent non déformée étant par exemple plus courte que les dents déformées.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Dispositif de fixation (10) comprenant un organe mécanique (11) dénommé «tige (15) » muni d'un tronçon fileté (16) s'étendant axialement le long d'un axe central (AX) de symétrie de la tige (15), ledit tronçon fileté (16) ayant au moins une entaille (25) s'étendant axialement dénommée « rainure (17) », ledit dispositif de fixation (10) comprenant un organe mécanique (11) dénommé « écrou (20) » pourvu d'une portion filetée (21) à visser audit tronçon fileté (16), ledit écrou (20) comprenant une pluralité de déports (23) s'étendant axialement à partir de ladite portion filetée (21), deux déports (23) adjacents étant séparés circonférentiellement par une entaille (25) dénommée « encoche (22) », ledit dispositif de fixation (10) ayant une rondelle-frein (30) destinée être agencée dans un espace interne (INT) localisé entre les déports (23) et le tronçon fileté (16), ladite rondelle-frein (30) étant munie d'une base (31) s'étendant radialement d'une périphérie (35) dite « périphérie interne (32) » vers une périphérie (35) dite « périphérie externe (33) », ladite rondelle-frein (30) étant pourvue d'au moins un ergot (40) s'étendant à partir d'une desdites périphéries (35) de la base (31), ladite rondelle-frein (30) étant pourvue d'une pluralité de dents (50) s'étendant chacune radialement avant que la rondelle-frein (30) soit introduite dans l'espace interne (INT) à partir de la périphérie (35) de la base (31) qui n'est pas solidaire d'un ergot (40), base
**caractérisé en ce qu'**un desdits organes mécaniques (11) comportant une gorge (60) annulaire au moins partiellement fermée axialement et ouverte radialement sur ledit espace interne (INT), chaque dent (50) étant flexible, lorsque ladite rondelle-frein (30) est en position de freinage dans ledit espace interne (INT), chaque ergot (40) est agencé dans une entaille (25) de l'organe mécanique (11) dépourvu de ladite gorge (60), lesdites dents (50) comprenant au moins une dent (50) dite « dent non déformée (53) » agencée dans au moins une entaille (25) de l'organe mécanique (11) pourvu de ladite gorge (60), lesdites dents (50) comprenant au moins une dent (50) dite « dent déformée (54) » qui est fléchie suite à une insertion axiale de la rondelle-frein (30) dans l'espace interne (INT), chaque dent déformée (54) présentant une extrémité libre (52) agencée dans ladite gorge (60), chaque dent déformée (54) présentant une angulation (100) comprise entre 0 degré et 90 degrés avec un plan (P1) contenant ladite base (31), ledit plan (P1) étant décalé axialement par rapport à ladite gorge (60) annulaire et perpendiculaire à l'axe central (AX).

2. Dispositif de fixation selon la revendication 1,
**caractérisé en ce que** chaque ergot (40) s'étend radialement avant l'insertion de la rondelle-frein (30) dans l'espace interne (INT).

3. Dispositif de fixation selon l'une quelconque des revendications 1 à 2,
**caractérisé en ce que** chaque ergot (40) est pliable plastiquement pour être plié avant l'insertion de la rondelle-frein (30) dans l'espace interne (INT).

4. Dispositif de fixation selon l'une quelconque des revendications 1 à 3,
**caractérisé en ce que** chaque ergot (40) présente axialement une première épaisseur (e1), chaque dent (50) présente axialement une deuxième épaisseur (e2) et la base présente axialement une troisième épaisseur (e3), la première épaisseur (e1), la deuxième épaisseur (e2) et la troisième épaisseur (e3) étant égales.

5. Dispositif de fixation selon l'une quelconque des revendications 1 à 3,
**caractérisé en ce que** chaque ergot (40) présente axialement une première épaisseur (e1), chaque dent (50) présente axialement une deuxième épaisseur (e2), la deuxième épaisseur (e2) étant inférieure à la première épaisseur (e1).

6. Dispositif de fixation selon l'une quelconque des revendications 1 à 5,
**caractérisé en ce que** lesdites dents (50) sont identiques.

7. Dispositif de fixation selon l'une quelconque des revendications 1 à 6,
**caractérisé en ce que** lesdites dents (50) sont circonférentiellement équiréparties sur la base (31).

8. Dispositif de fixation selon l'une quelconque des revendications 1 à 7,
**caractérisé en ce qu'**au moins deux dents (50) sont agencées dans une même entaille (25) lorsque la rondelle-frein (30) est agencée dans l'espace interne (INT).

9. Dispositif de fixation selon l'une quelconque des revendications 1 à 8,
**caractérisé en ce que** ladite base (31) est agencée axialement entre ladite gorge (60) et ladite portion filetée (21) lorsque la rondelle-frein (30) est agencée dans l'espace interne (INT).

10. Dispositif de fixation selon l'une quelconque des revendications 1 à 9,
**caractérisé en ce que** ledit tronçon fileté (16) entoure ladite portion filetée (21), chaque ergot (40) étant solidaire de la périphérie externe (33) de la base (31), chaque dent (50) étant solidaire de la périphérie interne (32) de la base (31), ladite gorge (60) étant ménagée dans lesdits déports (23).

11. Dispositif de fixation selon la revendication 10,
**caractérisé en ce que** chaque déport (23) est séparé dudit axe central par une première distance radiale (R3) minimale et ladite portion filetée (21) est séparée dudit axe central par une deuxième distance radiale (R4) minimale, ladite deuxième distance radiale (R4) étant supérieure à ladite première distance radiale (R3).

12. Dispositif de fixation selon l'une quelconque des revendications 10 à 11,
**caractérisé en ce que** lesdits déports (23) définissant un espace circulaire (200) creux délimitant axialement l'espace interne (INT), ledit espace interne (INT) présentant un premier rayon (R1) au niveau d'un plan (P1) vertical traversant ladite base, lesdites extrémités libres (52) des dents (50) délimitant un cercle (300) présentant un deuxième rayon (R2) avant l'insertion de la rondelle-frein (30) dans l'espace interne (INT), ledit deuxième rayon (R2) est inférieur au premier rayon (R1).

13. Dispositif de fixation selon l'une quelconque des revendications 1 à 9,
**caractérisé en ce que** ledit tronçon fileté (16) est entouré par ladite portion filetée (21), chaque ergot (40) étant solidaire de la périphérie interne (32) de la base (31), chaque dent (50) étant solidaire de la périphérie externe (33) de la base (31), ladite gorge (60) étant ménagée dans lesdits déports (23).

14. Dispositif de fixation selon la revendication 13,
**caractérisé en ce que** chaque déport (23) est séparé dudit axe central par une première distance radiale (R3) minimale et ladite portion filetée (21) est séparée dudit axe central par une deuxième distance radiale (R4) minimale, ladite deuxième distance radiale (R4) étant inférieure à ladite première distance radiale (R3).

15. Dispositif de fixation selon l'une quelconque des revendications 13 à 14,
**caractérisé en ce que** lesdits déports (23) définissant un espace circulaire (200) creux délimitant axialement l'espace interne (INT), ledit espace interne (INT) présentant un premier rayon (R1) au niveau d'un plan (P1) vertical traversant ladite base, lesdites extrémités libres (52) des dents (50) étant inscrites dans un cercle (300) présentant un deuxième rayon (R2) avant l'insertion de la rondelle-frein (30) dans l'espace interne (INT), ledit deuxième rayon (R2) est supérieur au premier rayon (R1).

16. Dispositif de fixation selon l'une quelconque des revendications 1 à 9,
**caractérisé en ce que** ledit tronçon fileté (16) est entouré par ladite portion filetée (21), chaque ergot (40) étant solidaire de la périphérie externe (33) de la base (31), chaque dent (50) étant solidaire de la périphérie interne (32) de la base (31), ladite gorge (60) étant ménagée dans ladite tige (15).

17. Dispositif de fixation selon l'une quelconque des revendications 1 à 9,
**caractérisé en ce que** ledit tronçon fileté (16) entoure ladite portion filetée (21), chaque ergot (40) étant solidaire de la périphérie interne (32) de la base (31), chaque dent (50) étant solidaire de la périphérie externe (33) de la base (31), ladite gorge (60) étant ménagée dans ladite tige (15).

18. Procédé de fixation,
**caractérisé en ce que** ledit procédé mettant en oeuvre le dispositif de fixation (10) selon l'une quelconque des revendications 1 à 17, ce procédé comporte les étapes suivantes :
- vissage de la portion filetée (21) de l'écrou (20) sur le tronçon fileté (16) de la tige (15),
- insertion de la rondelle-frein (30) dans l'espace interne (INT) en disposant chaque ergot (40) dans une entaille (25) de l'organe mécanique (11) dépourvu de ladite gorge (60) du tronçon fileté (16), chaque dent déformée (54) étant fléchie lors du contact des dents (50) avec l'organe mécanique (11) pourvu de ladite gorge (60), ladite rondelle-frein (30) étant enfoncée dans l'espace interne (INT) jusqu'à ce que l'extrémité libre (51) de chaque dent déformée (54) pénètre dans ladite gorge (60), chaque dent non déformée (53) étant agencée dans au moins une entaille (25) de l'organe mécanique (11) pourvu de ladite gorge (60).

19. Procédé de fixation selon la revendication 18,
**caractérisé en ce que** l'insertion de la rondelle-frein (30) est réalisée en poussant ladite base (31) avec une bague.

## Patentansprüche

1. Befestigungsvorrichtung (10) mit einem "Stange (15)" genannten mechanischen Element (11), welches mit einem Gewindeabschnitt (16) versehen ist, der sich axial entlang einer mittleren Symmetrieachse (AX) der Stange (15) erstreckt, wobei der Gewindeabschnitt (16) mindestens eine Kerbe (25) aufweist, die sich axial erstreckt, und "Nut (17)" genannt wird, wobei die Befestigungsvorrichtung (10) ein "Schraubenmutter (20)" genanntes mechanisches Element (11) aufweist, das mit einem Gewindeabschnitt (21) versehen ist, der auf den Gewindeabschnitt (16) zu schrauben ist, wobei die Schraubenmutter (20) eine Mehrzahl von Versatzstücken (23) aufweist, die sich axial ausgehend von dem Gewindeabschnitt (21) erstrecken, wobei zwei benachbarte Versatzstücke (23) in Umfangsrichtung durch eine "Kerbe (22)" genannte Kerbe getrennt sind, wobei die Befestigungsvorrichtung (10) eine Sicherungsscheibe (30) aufweist, die dazu bestimmt ist, in einem Innenraum (INT) angebracht zu werden, der zwischen den Versatzstücken (23) und dem Gewindeabschnitt (16) liegt, wobei die Sicherungsscheibe (30) mit einer Basis (31) versehen ist, die sich radial von einem "innerer Umfang (32)" genannten Umfang (35) zu einem "äußerer Umfang (33)" genannten Umfang (35) erstreckt, wobei die Sicherungsscheibe (30) mit mindestens einem Stift (40) versehen ist, der sich ausgehend von einem der Umfänge (35) der Basis (31) erstreckt, wobei die Sicherungsscheibe (30) mit einer Mehrzahl von Zähnen (50) versehen ist, die sich jeweils radial erstrecken, bevor die Sicherungsscheibe (30) in den Innenraum (INT), ausgehend von dem Umfang (35) der Basis (31), die nicht mit einem Stift (40) fest verbunden ist, eingeführt wird,
**dadurch gekennzeichnet, dass** die mechanischen Elemente (11) eine ringförmige Hohlkehle (60) aufweisen, die mindestens teilweise axial geschlossen und zu dem Innenraum (INT) hin radial offen ist, wobei jeder Zahn (50) biegbar ist, wenn die Sicherungsscheibe (30) in dem Innenraum (INT) in Bremsstellung ist, wobei jeder Stift (40) in einer Kerbe (25) des mechanischen Elements (11), das mit der Hohlkehle (60) versehen ist, angeordnet ist, wobei die Zähne (50) mindestens einen "nicht verformten Zahn (53)" genannten Zahn (50) aufweisen, der in mindestens einer Kerbe (25) des mechanischen Elements (11), das mit der Hohlkehle (60) versehen ist, angeordnet ist, wobei die Zähne (50) mindestens einen "verformter Zahn (54)" genannten Zahn (50) aufweisen, der nach einer axialen Einführung der Sicherungsscheibe (30) in den Innenraum (INT) gebogen ist, wobei jeder verformte Zahn (54) ein freies Ende (52) aufweist, das in der Hohlkehle (60) angeordnet ist, wobei jeder verformte Zahn (54) eine Winkelstellung (100) zwischen 0 Grad und 90 Grad bezüglich einer Ebene (P1) aufweist, die die Basis (31) enthält, wobei die Ebene (P1) axial gegenüber der ringförmigen Hohlkehle (60) und senkrecht zu der Mittelachse (AX) versetzt ist.

2. Befestigungsvorrichtung nach Anspruch 1,
**dadurch gekennzeichnet, dass** jeder Stift (40) sich vor der Einführung der Sicherungsscheibe (30) radial in den Innenraum (INT) erstreckt.

3. Befestigungsvorrichtung nach einem der Ansprüche 1 bis 2,
**dadurch gekennzeichnet, dass** jeder Stift (40) plastisch knickbar ist, um vor der Einführung der Sicherungsscheibe (30) in den Innenraum (INT) geknickt zu werden.

4. Befestigungsvorrichtung nach einem der Ansprüche 1 bis 3,
**dadurch gekennzeichnet, dass** jeder Stift (40) axial eine erste Dicke (e1) aufweist, jeder Zahn (50) axial eine zweite Dicke (e2) aufweist, und die Basis axial eine dritte Dicke (e3) aufweist, wobei die erste Dicke (e1), die zweite Dicke (e2) und die dritte Dicke (e3) gleich sind.

5. Befestigungsvorrichtung nach einem der Ansprüche 1 bis 3,
**dadurch gekennzeichnet, dass** jeder Stift (40) axial eine erste Dicke (e1), jeder Zahn (50) eine zweite Dicke (e2) aufweist, wobei die zweite Dicke (e2) kleiner als die erste Dicke (e1) ist.

6. Befestigungsvorrichtung nach einem der Ansprüche 1 bis 5,
**dadurch gekennzeichnet, dass** die Zähne (50) identisch sind.

7. Befestigungsvorrichtung nach einem der Ansprüche 1 bis 6,
**dadurch gekennzeichnet, dass** die Zähne (50) in Umfangsrichtung auf der Basis (31) gleichmäßig verteilt angeordnet sind.

8. Befestigungsvorrichtung nach einem der Ansprüche 1 bis 7,
**dadurch gekennzeichnet, dass** mindestens zwei Zähne (50) in einer selben Kerbe (25) angeordnet sind, wenn die Sicherungsscheibe (30) in dem Innenraum (INT) angeordnet ist.

9. Befestigungsvorrichtung nach einem der Ansprüche 1 bis 8,
**dadurch gekennzeichnet, dass** die Basis (31) axial zwischen der Hohlkehle (60) und dem Gewindeabschnitt (21) angeordnet ist, wenn die Sicherungsscheibe (30) in dem Innenraum (INT) angeordnet ist.

10. Befestigungsvorrichtung nach einem der Ansprüche 1 bis 9,
**dadurch gekennzeichnet, dass** der Gewindeabschnitt (16) den Gewindeabschnitt (21) umgibt, wobei jeder Stift (40) mit dem äußeren Umfang (33) der Basis (31) fest verbunden ist, jeder Zahn (50) mit dem inneren Umfang (32) der Basis (31) fest verbunden ist, die Hohlkehle (60) in den Versatzstücken (23) eingearbeitet ist.

11. Befestigungsvorrichtung nach Anspruch 10,
**dadurch gekennzeichnet, dass** jedes Versatzstück (23) von der mittleren Achse durch einen ersten minimalen radialen Abstand (R3) getrennt ist, und der Gewindeabschnitt (21) von der mittleren Achse durch einen zweiten minimalen radialen Abstand (R4) getrennt ist, wobei der zweite radiale Abstand (R4) größer als der erste radiale Abstand (R3) ist.

12. Befestigungsvorrichtung nach einem der Ansprüche 10 bis 11, **dadurch gekennzeichnet, dass** die Versatzstücke (23) einen hohlen Innenraum (200) definieren, der axial den Innenraum (INT) begrenzt, wobei der Innenraum (INT) einen ersten Radius (R1) auf der Höhe einer vertikalen Ebene (P1) aufweist, die die Basis durchquert, wobei die freien Enden (52) der Zähne (50) einen Kreis (300) eingrenzen, der vor der Einführung der Sicherungsscheibe (30) in den Innenraum (INT) einen zweiten Radius (R2) aufweisen, wobei der zweite Radius (R2) kleiner als der erste Radius (R1) ist.

13. Befestigungsvorrichtung nach einem der Ansprüche 1 bis 9,
**dadurch gekennzeichnet, dass** der Gewindeabschnitt (16) von dem Gewindeabschnitt (21) umgeben ist, wobei jeder Stift (40) mit dem Innenumfang (32) der Basis (31) fest verbunden ist, jeder Zahn (50) mit dem Außenumfang (33) der Basis (31) fest verbunden ist, die Hohlkehle (60) in den Versatzstücken (23) eingearbeitet ist.

14. Befestigungsvorrichtung nach Anspruch 13,
**dadurch gekennzeichnet, dass** jedes Versatzstück (23) von der mittleren Achse durch einen ersten minimalen radialen Abstand (R3) getrennt ist, und der Gewindeabschnitt (21) von der mittleren Achse durch einen zweiten minimalen radialen Abstand (R4) getrennt ist, wobei der zweite radiale Abstand (R4) kleiner ist als der erste radiale Abstand (R3).

15. Befestigungsvorrichtung nach einem der Ansprüche 13 bis 14, **dadurch gekennzeichnet, dass** die Versatzstücke (23) einen hohlen Ringraum (200) definieren, der axial den Innenraum (INT) eingrenzt, wobei der Innenraum (INT) einen ersten Radius (R1) auf der Höhe einer vertikalen Ebene (P1) aufweist, der die Basis durchquert, wobei die freien Enden (52) der Zähne (50) in einem Kreis (300) eingeschrieben sind, der vor der Einführung der Sicherungsscheibe (30) in den Innenraum (INT) einen zweiten Radius (R2) aufweist, wobei der zweite Radius (R2) größer als der erste Radius (R1) ist.

16. Befestigungsvorrichtung nach einem der Ansprüche 1 bis 9,
**dadurch gekennzeichnet, dass** der Gewindeabschnitt (16) von dem Gewindeabschnitt (21) umgeben ist, wobei jeder Stift (40) fest mit dem äußeren Umfang (33) der Basis (31) verbunden ist, jeder Zahn (50) mit dem inneren Umfang (32) der Basis (31) fest verbunden ist, die Hohlkehle (60) in der Stange (15) eingearbeitet ist.

17. Befestigungsvorrichtung nach einem der Ansprüche 1 bis 9,
**dadurch gekennzeichnet, dass** der Gewindeabschnitt (16) den Gewindeabschnitt (21) umgibt, wobei jeder Stift (40) mit dem inneren Umfang (32) der Basis (31) verbunden ist, jeder Zahn (50) mit dem äußeren Umfang (33) der Basis (31) fest verbunden ist, die Hohlkehle (60) in den Stab (15) eingearbeitet ist.

18. Befestigungsverfahren,
**dadurch gekennzeichnet, dass** bei dem Verfahren die Befestigungsvorrichtung (10) nach einem der Ansprüche 1 bis 17 verwendet wird, wobei das Verfahren folgende Schritte aufweist:
- Aufschrauben des Gewindebereichs (21) der Schraubenmutter (20) auf den Gewindeabschnitt (16) des Stabs (15),
- Einführen der Sicherungsscheibe (30) in den Innenraum (INT), indem jeder Stift (40) in einer Kerbe (25) des mechanischen Elements (11) platziert wird, ohne die Hohlkehle (60) des Gewindeabschnitts (16), wobei jeder verformte Zahn (54) während des Kontakts der Zähne (50) mit dem mechanischen Element (11), welches mit der Hohlkehle (60) versehen ist, gebogen wird, wobei die Sicherungsscheibe (30) in den Innenraum (INT) eingedrückt wird, bis das freie Ende (51) eines jeden verformten Zahns (54) in die Hohlkehle (60) eindringt, wobei jeder nicht verformte Zahn (53) in mindestens einer Kerbe (25) des mechanischen Elements (11) angeordnet ist, das die Hohlkehle (60) aufweist.

19. Befestigungsverfahren nach Anspruch 18,
**dadurch gekennzeichnet, dass** das Einführen der Sicherungsscheibe (30) realisiert wird, indem die Basis (31) mit einem Ring gepresst wird.

## Claims

1. Fastening device (10) comprising a mechanical member (11) referred to as "rod (15)" provided with a threaded section (16) extending axially along a central axis (AX) of symmetry of the rod (15), said threaded section (16) having at least one notch (25) extending axially referred to as "groove (17)", said fastening device (10) comprising a mechanical member (11) referred to as "nut (20)" provided with a threaded portion (21) to be screwed onto said threaded section (16), said nut (20) comprising a plurality of offsets (23) extending axially from said threaded portion (21), two adjacent offsets (23) being separated circumferentially by an indent (25) referred to as "notch (22)", said fastening device (10) having a lock washer (30) intended to be arranged in an internal space (INT) located between the offsets (23) and the threaded section (16), said lock washer (30) being provided with a base (31) extending radially from a periphery (35) called "internal periphery (32)" towards a periphery (35) called "external periphery (33)", said lock washer (30) being provided with at least one lug (40) extending from one of said peripheries (35) of the base (31), said lock washer (30) being provided with a plurality of teeth (50) each extending radially before the lock washer (30) is introduced into the internal space (INT) from the periphery (35) of the base (31) which is not integral with a lug (40), base
**characterised in that** one of said mechanical members (11) comprising an annular groove (60) at least partially closed axially and open radially onto said internal space (INT), each tooth (50) being flexible, when said lock washer (30) is in the braking position in said internal space (INT), each lug (40) is arranged in an indent (25) of the mechanical member (11) lacking said groove (60), said teeth (50) comprising at least one tooth (50) called "non-deformed tooth (53)" arranged in at least one indent (25) of the mechanical member (11) provided with said groove (60), said teeth (50) comprising at least one tooth (50) called "deformed tooth (54)" which is flexed due to an axial insertion of the lock washer (30) in the internal space (INT), each deformed tooth (54) having a free end (52) arranged in said groove (60), each deformed tooth (54) forming an angle (100) comprised between 0 degree and 90 degrees with a plane (P1) containing said base (31), said plane (P1) being offset axially with respect to said annular groove (60) and perpendicular to the central axis (AX).

2. Fastening device according to claim 1,
**characterised in that** each lug (40) extends radially before the insertion of the lock washer (30) in the internal space (INT).

3. Fastening device according to any one of claims 1 to 2,
**characterised in that** each lug (40) is plastically bendable to be bent before the insertion of the lock washer (30) in the internal space (INT).

4. Fastening device according to any one of claims 1 to 3,
**characterised in that** each lug (40) has axially a first thickness (e1), each tooth (50) has axially a second thickness (e2) and the base has axially a third thickness (e3), the first thickness (e1), the second thickness (e2) and the third thickness (e3) being equal.

5. Fastening device according to any one of claims 1 to 3, **characterised in that** each lug (40) has axially a first thickness (e1), each tooth (50) has axially a second thickness (e2), the second thickness (e2) being less than the first thickness (e1).

6. Fastening device according to any one of claims 1 to 5,
**characterised in that** said teeth (50) are identical.

7. Fastening device according to any one of claims 1 to 6,
**characterised in that** said teeth (50) are circumferentially equally distributed on the base (31).

8. Fastening device according to any one of claims 1 to 7,
**characterised in that** at least two teeth (50) are arranged in a same indent (25) when the lock washer (30) is arranged in the internal space (INT).

9. Fastening device according to any one of claims 1 to 8,
**characterised in that** said base (31) is arranged axially between said groove (60) and said threaded portion (21) when the lock washer (30) is arranged in the internal space (INT).

10. Fastening device according to any one of claims 1 to 9,
**characterised in that** said threaded section (16) surrounds said threaded portion (21), each lug (40) being integral with the external periphery (31) of the base (31), each tooth (50) being integral with the internal periphery (32) of the base (31), said groove (60) being provided in said offsets (23).

11. Fastening device according to claim 10,
**characterised in that** each offset (23) is separated from said central axis by a first minimum radial distance (R3) and said threaded portion (21) is separated from said central axis by a second minimum radial distance (R4), said second radial distance (R4) being greater than said first radial distance (R3).

12. Fastening device according to any one of claims 10 to 11,
**characterised in that** said offsets (23) defining a hollow circular space (200) delimiting axially the internal space (INT), said internal space (INT) having a first radius (R1) at the level of a vertical plane (P1) passing through said base, said free ends (52) of the teeth (50) delimiting a circle (300) having a second radius (R2) before the insertion of the lock washer (30) in the internal space (INT), said second radius (R2) is less than the first radius (R1).

13. Fastening device according to any one of claims 1 to 9,
**characterised in that** said threaded section (16) is surrounded by said threaded portion (21), each lug (40) being integral with the internal periphery (32) of the base (31), each tooth (50) being integral with the external periphery (33) of the base (31), said groove (60) being provided in said offsets (23).

14. Fastening device according to claim 13,
**characterised in that** each offset (23) is separated from said central axis by a first minimum radial distance (R3) and said threaded portion (21) is separated from said central axis by a second minimum radial distance (R4), said second radial distance (R4) being less than said first radial distance (R3).

15. Fastening device according to any one of claims 13 to 14,
**characterised in that** said offsets (23) defining a hollow circular space (200) delimiting axially the internal space (INT), said internal space (INT) having a first radius (R1) at the level of a vertical plane (PI) passing through said base, said free ends (52) of the teeth (50) being inscribed in a circle (300) having a second radius (R2) before the insertion of the lock washer (30) in the internal space (INT), said second radius (R2) is greater than the first radius (R1).

16. Fastening device according to any one of claims 1 to 9,
**characterised in that** said threaded section (16) is surrounded by said threaded portion (21), each lug (40) being integral with the external periphery (33) of the base (31), each tooth (50) being integral with the internal periphery (32) of the base (31), said groove (60) being provided in said rod (15).

17. Fastening device according to any one of claims 1 to 9,
**characterised in that** said threaded section (16) is surrounded by said threaded portion (21), each lug (40) being integral with the internal periphery (32) of the base (31), each tooth (50) being integral with the external periphery (33) of the base (31), said groove (60) being provided in said rod (15).

18. Fastening method,
**characterised in that** said method implementing the fastening device (10) according to any one of claims 1 to 17, this method comprises the following steps:
- screwing of the threaded portion (21) of the nut (20) onto the threaded section (16) of the rod (15),
- insertion of the lock washer (30) in the internal space (INT) by arranging each lug (40) in an indent (25) of the mechanical member (11) lacking said groove (60) of the threaded section (16), each deformed tooth (54) being flexed upon contact of the teeth (50) with the mechanical member (11) provided with said groove (60), said lock washer (30) being driven into the internal space (INT) until the free end (51) of each deformed tooth (54) penetrates into said groove (60), each non-deformed tooth (53) being arranged in at least one indent (25) of the mechanical member (11) provided with said groove (60).

19. Fastening method according to claim 18,
**characterised in that** the insertion of the lock washer (30) is carried out by pushing said base (31) with a ring.
